Europäisches Patentamt

European Patent Office

Office européen des brevets

(11) Veröffentlichungsnummer: **0 170 953**
**A2**

(12) # EUROPÄISCHE PATENTANMELDUNG

(21) Anmeldenummer: 85109015.9

(51) Int. Cl.⁴: **B 29 C 43/48**

(22) Anmeldetag: 19.07.85

(30) Priorität: **06.08.84 DE 3428936**

(71) Anmelder: **Continental Gummi-Werke Aktiengesellschaft, Königsworther Platz 1, D-3000 Hannover 1 (DE)**

(43) Veröffentlichungstag der Anmeldung: **12.02.86 Patentblatt 86/7**

(84) Benannte Vertragsstaaten: **AT BE CH DE FR GB IT LI LU NL SE**

(72) Erfinder: **Köhler, Josef, Silcherstrasse 28, D-3410 Northeim (DE)**

(54) Presse zum kontinuierlichen Herstellen von bahnförmigem Pressgut.

(57) In kontinuierlich arbeitenden Vulkanisierpressen wird das durchlaufende Preßgut an beiden Seiten zwischen mitlaufenden biegsamen Beilagestreifen geführt. Erfindungsgemäß sind im Einlaufbereich der Presse auf die Beilagestreifen einwirkende Andrückvorrichtungen vorgesehen, um den unmittelbaren Kontakt der Streifen mit den Seitenkanten des Preßgutes schon in der Anfangsphase der Vulkanisationsbehandlung herzustellen. Im Vergleich zu der bekannten Anordnung mit Abstand vor der Presse ergibt sich hieraus eine wesentlich genauere Führung der Beilagestreifen und damit auch eine qualitative Verbesserung des Enderzeugnisses.

I

Continental Gummi-Werke Aktiengesellschaft, 3000 Hannover

Presse zum kontinuierlichen Herstellen von bahnförmigem Preßgut

Die Erfindung bezieht sich auf Pressen zum kontinuierlichen Herstellen von bahnförmigem Preßgut wie beispielsweise Fördergurten, Holzspanplatten u. dgl., mit das Preßgut zwischen sich einschließenden und unter der Druckeinwirkung von Rollenkörpern gegeneinander anstellbaren durchlaufenden endlosen Formbändern und mit beiderseits des Preßgutes in unmittelbarem Kontakt mit dessen Seitenkanten mitlaufenden biegsamen Beilagestreifen.

Die in Drehtrommel- wie auch in Durchlauf-Plattenpressen verwendeten mitlaufenden Beilagestreifen begrenzen die Breite des verfügbaren Pressenraumes in Anpassung an die von Fall zu Fall wechselnden Breitenabmessungen des Preßgutes und ergeben dadurch geradlinige und scharfkantig abgeformte Seitenflächen. Die in aller Regel aus mehreren Schichten gummierter Gewebelagen aufgebauten biegsamen Beilagestreifen werden üblicherweise von stationären Rollen abgewickelt und antriebslos zusammen mit dem Preßgut in die Presse eingezogen, wobei ihr genauer gegenseitiger Abstand in der Presse vorgeordneten besonderen Führungsvorrichtungen vorab eingestellt und festgelegt wird. Der Erfindung liegt als Aufgabe zugrunde, mit einer neuartigen Führung der Beilagestreifen Ausrichtungsfehler der Streifen gegeneinander und selbst geringfügige Abweichungen von ihrem Geradlauf innerhalb des Pressenraumes mit Sicherheit auszuschließen und im Endeffekt ein mit hoher Gleichmäßigkeit genau ausgeformtes verbessertes Arbeitsergebnis zu gewährleisten.

Nach der Erfindung sind an Pressen der eingangs geschilderten Art quer zur Durchlaufrichtung an die äußeren Seitenflächen der Beilagestreifen unter Krafteinwirkung von außen anpreßbare Druckkörper im Einlaufbereich der Presse zwischen den Formbändern - vorteilhaft paarweise in gegenständiger Anordnung beiderseits der Presse - vorgesehen, wobei die Druckkörper gemäß einem Teilmerkmal der Erfindung zweckmäßig als drehbar an Stellorgan-en, z.B. dem freien Ende der Kolbenstange von Druckmittelarbeitszylindern gelagerte und auf den Beilagestreifen sich abwälzende Druckrollen ausgebildet sind.

Während es sich aus Gründen vereinfachter Konstruktion und auch im Hinblick auf die Funktionssicherheit bisher als selbstverständlich anbot, die Führungsvorrichtung für die Beilagestreifen noch außerhalb des eigentlichen Pressenraumes der Presse in gewissem räumlichen Abstand vorzuordnen und in dem freien Übergangsweg der endgültig ausgerichteten Streifen zum Presseneinlauf keine nachteiligen Auswirkungen vermutet wurden, zeigte die jeder Logik technischer Überlegungen scheinbar widersprechende neuartige Anordnung und Gestaltung der Streifenführungen überraschend günstige Resultate, die auf eine wesentlich genauere Maßabstimmung und über große Fertigungslängen gleichbleibend gute Beschaffenheit der sonst stets kritischen Seitenkanten des Preßgutes hinauslaufen. Die Ursache hierfür ist wahrscheinlich in dem aus dem Verlegen der letzten maßgeblichen Richtungsbeeinflussung der Streifen in den Pressenraum schon in den Wirkungsbereich der Formbänder hinein sich ergebenden Fortfall jeden Freiweges der Streifen zu sehen. Die Beilagestreifen erfahren ihre Endorientierung im Zustand eines bereits bestehenden Zwangsschlusses zwischen den Formbändern, der den aufgegebenen Richtungsimpuls gleichsam konserviert und jedes Risiko einer möglicherweise durch unkontrollierte Schwingungsvorgänge oder andere äußere Anstöße hervorgerufenen Auslenkung ausschließt.

Zum Verdeutlichen der Erfindung ist ein Ausführungsbeispiel in der Zeichnung schematisch dargestellt. Die Zeichnung zeigt in grober Vereinfachung in:

Fig. 1 einen Teillängsschnitt durch den Einlaufbereich einer Presse und in

Fig. 2 eine Teildraufsicht auf die Presse nach der Linie II÷II in Fig. 1.

Die beispielsweise zum Herstellen von Fördergurten dienende gezeichnete Presse ist mit der Darstellung der beheizbaren Pressenplatten 3, 4 symbolisiert. Durch den zwischen den Platten gebildeten Pressenraum wird der Gurtrohling 5 mit konstanter Geschwindigkeit in Richtung des Pfeiles A hindurchgezogen, wobei die Durchlaufgeschwindigkeit derart auf die Plattenlänge abgestimmt ist, daß der elastomere Gurtwerkstoff am Ausgang der Presse mit Sicherheit vollständig ausvulkanisiert bzw. vernetzt ist. Die beiden Pressenplatten 3, 4 sind in bekannter Weise beispielsweise durch Auflagern der unteren Platte 4 auf nichtgezeichneten Hubzylindern gegeneinander anstellbar, um die notwendige Druckwirkung auf den Gurtrohling 5 auszuüben. Die Relativbewegung zwischen Platten und Rohling wird durch mitlaufende Stahlformbänder 6, 7, die sich über Rollenketten 8 gegen die Pressenplatten abstützen, ausgeglichen. Seitlich wird der Pressenraum durch ebenfalls mit dem Gurtrohling 5 mitlaufende biegsame Beilagestreifen 9 begrenzt. Pressen dieser Art sind in verschiedenen Ausführungen und Ausstattungen bekannt.

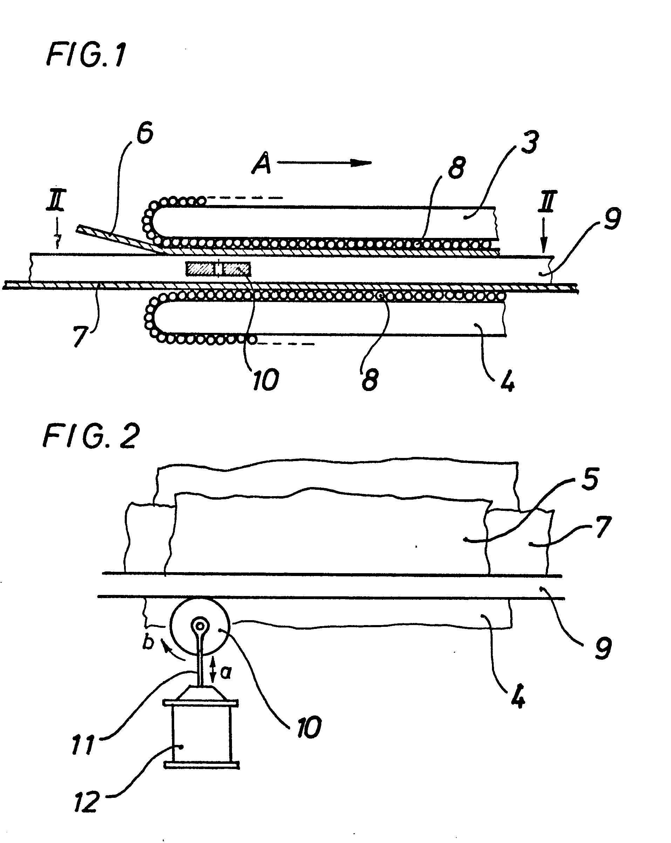

Erfindungsgemäß ist im Eingangsbereich eine auf die Beilagestreifen 9 wirksame Andrückvorrichtung in Form einer drehbar an der Kolbenstange 11 eines Arbeitszylinders 12 gelagerten Druckrolle 10 vorgesehen. Die Teildarstellung in Fig. 2 ergänzend ist eine gleiche Druckrolle in Gegenüberstellung in Verbindung mit dem der anderen Gurtkante zugeordneten Beilagestreifen vorauszusetzen. Beide Druckrollen sind durch Ein- und Ausfahren der Kolbenstange 11 im Sinne des Doppelpfeiles 10 gegeneinander und in bezug auf die Beilagestreifen 9 anstellbar. In dem gezeichneten Wirkzustand liegen die Rollen mit einer wählbaren Anpreßkraft an den Streifen an und wälzen sich im Verlaufe der Durchlaufbewegung des derart eingefaßten und geführten Gurtrohlings 5 in der durch Pfeil b angedeuteten Drehrichtung auf der Streifenaußenfläche ab.

Patentansprüche:

1. Presse zum kontinuierlichen Herstellen von bahnförmigem Preßgut wie beispielsweise Fördergurten, Holzspanplatten u. dgl., mit das Preßgut zwischen sich einschließenden und unter der Druckeinwirkung von Rollenkörpern gegeneinander anstellbaren durchlaufenden endlosen Formbändern und mit beiderseits des Preßgutes in unmittelbarem Kontakt mit dessen Seitenkanten mitlaufenden biegsamen Beilagestreifen, dadurch gekennzeichnet, daß quer zur Durchlaufrichtung an die äußeren Seitenflächen der Beilagestreifen (9) unter Krafteinwirkung von außen anpreßbare Druckkörper im Einlaufbereich der Presse zwischen den Formbändern (6, 7) vorgesehen sind.

2. Presse nach Anspruch 1, dadurch gekennzeichnet, daß die Druckkörper paarweise in gegenständiger Anordnung beiderseits der Presse vorgesehen sind.

3. Presse nach den Ansprüchen 1 und 2, dadurch gekennzeichnet, daß die Druckkörper drehbar an Stellorganen gelagerte, auf den Beilagestreifen (9) sich abwälzende Druckrollen (10) sind.

4. Presse nach Anspruch 3, dadurch gekennzeichnet, daß die Druckrollen (10) an dem freien Ende der quer zur Durchlaufrichtung der Presse ausfahrbaren Kolbenstange (11) von Druckmittel-Arbeitszylindern (12) angeordnet sind.

Hannover, den 3. August 1984
84-48 P/Sü                    Sü/Lo

FIG.1

FIG.2